# EUROPÄISCHE PATENTSCHRIFT

(11) **EP 1 508 268 B1**
(45) Veröffentlichungstag und Bekanntmachung des Hinweises auf die Patenterteilung: **12.04.2017**
(21) Anmeldenummer: 04019549.7
(22) Anmeldetag: 18.08.2004
(51) Int. Cl.: A01F 15/08, G01G 19/08

(54) **Rundballenpresse**
Rotobaler
Presse à balles rondes

(30) Priorität: 21.08.2003 DE 10338349
(43) Veröffentlichungstag der Anmeldung: 23.02.2005
(73) Patentinhaber: Lely Maschinenfabrik GmbH, 38304 Wolfenbüttel (DE)
(72) Erfinder: Arnold, Martin, 38275 Steinlah (DE)
(74) Vertreter: Octrooibureau Van der Lely N.V.

(56) Entgegenhaltungen:
- EP-A- 1 424 000
- DE-A- 4 208 091
- US-A- 5 811 739
- US-A- 5 913 801
- US-B1- 6 457 295

## Beschreibung

Die Erfindung betrifft eine Rundballenpresse mit einer sich über Wägesensoren auf einer Abrollvorrichtung abstützenden Wägeplattform zur Erfassung der Gewichtskraft eines fertig gebundenen Rundballens.

Die vorstehend beschriebene Rundballenpresse lässt sich der DE 199 10 555 A1 und der EP1424000-A1 (Stand der Technik laut Art.54(3) EPÜ) entnehmen. In einer ersten Ausführungsform soll die Wägung eines Rundballens während der Abrollbewegung auf einer auf dem Erdboden abgestützten Abrollvorrichtung erfolgen. Hierzu ist an der Abrollvorrichtung etwa auf halber Länge eine sich in Fahrtrichtung nach hinten erstreckende Wägeplattform schwenkbar angelenkt. Die Wägeplattform stützt sich auf einem oder mehreren an der Abrollvorrichtung befestigten Wägesensoren ab. Die Wägung soll am Ende der Abrollvorrichtung erfolgen. Dazu ist oberhalb des Wägesensors ein elektrischer Überfahrschalter vorgesehen, der ein Signal erzeugt, wenn der Ballenschwerpunkt über die Wirkrichtung des Wägesensors läuft. Mit dieser Einrichtung ist grundsätzlich eine Ermittlung des Ballengewichtes möglich. Von großem Nachteil ist, dass die Wägung in Abhängigkeit vom Ballenschwerpunkt während der Ballenbewegung erfolgen soll. Nachteilig ist auch, dass die Abrollvorrichtung relativ lang baut. Das hat zur Folge, dass das Gesamtsystem von Wägeeinrichtung und Rundballen nur eine relativ kleine Schwingungsfrequenz aufweist, so dass der Rundballen die Wägeplattform schon verlassen hat, wenn sich die Wägeeinrichtung im eingeschwungenen Zustand befindet. Der Messgenauigkeit dieses Prinzips sind somit Grenzen gesetzt, die sich nur mit hohem konstruktiven Mehraufwand beseitigen lassen.

In den anderen Ausführungsbeispielen soll der Ballen für die Dauer einer Messung auf der Abrollvorrichtung angehalten werden. Hierzu soll sich die Abrollvorrichtung nicht auf dem Boden abstützen, sondern der Rundballen wird nach dem Ballenausstoß in eine relativ flache Mulde abgegeben oder in einer Schere gehalten. Anstelle einer Wägeplattform in der Abrollvorrichtung ist die Wägeeinrichtung hier zwischen Rundballenpresse und Abrollvorrichtung angeordnet,

Die letztgenannten Einrichtungen haben vor allem zwei Nachteile:
a) das gesamte Ballengewicht ist von der Rundballenpresse aufzunehmen, was aufgrund der Hebelarmverhältnisse eine deutlich stärkere Konstruktion der Presse erfordert und unzulässige, negative Stützlasten an der Deichsel verursacht,
b) der Rundballen pendelt in der etwa horizontalen Mulde zunächst relativ lange hin und her, bis er zum Stillstand kommt. Die damit verbundenen Schwingungen lassen in einer kurzen Zeitdauer keine brauchbaren Messungen zu.

Der Erfindung liegt die Aufgabe zugrunde, die vorstehend beschriebene Wägeeinrichtung hinsichtlich der Messgenauigkeit zu verbessern und eine einfachere und kostengünstigere Lösung zu entwickeln.

Diese Aufgabe wird erfindungsgemäß durch die Merkmale der Ansprüche 1 oder 2 gelöst.

Auf diese Art und Weise wird der Rundballen vorübergehend auf der Wägeplattform gezielt gebremst und/oder angehalten, um eine schnelle Messung nach der Einschwingzeit des Systems zu gewährleisten. Dabei nutzt die Erfindung den Vorgang, dass der Rundballen unmittelbar nach dem Ausstoß aus dem Pressengehäuse ohnehin seine Drehrichtung umkehrt und dadurch kurzzeitig im Stillstand ist. Das Ausnutzen dieses Vorganges minimiert die zeitliche Verzögerung durch den Wiegevorgang. Da sich die Abrollvorrichtung während des Wiege- und Abrollvorganges auf dem Erdboden abstützt, ergeben sich trotz eingebauter Wägeplattform keine Belastungsänderungen für die Presse. Durch den Bodenkontakt klingen Schwingungen schneller ab. Durch die erfindungsgemäße Ausgestaltung der Wägeplattform ist gewährleistet, dass die Summe aller Kräfte an der Wägeplattform im Gleichgewicht bleibt und keine neuen Störgrößen entstehen. Unterschiedliche Schwerpunktlagen ergeben keine Messfehler, sondern werden prinzipbedingt berücksichtigt. Aufgrund des Ballenstillstandes sind bei einer Stillstandsdauer von 2 bis 3 Sekunden alle Störgrößen abgeklungen, so dass Messabweichungen von unter 1% bezogen auf das Gewicht eines Ballens mit geringem Aufwand erreichbar sind. Unterschiedliche Ballendurchmesser und - lagen ergeben keine Messfehler, soweit der Rundballen nur die Wägeplattform und die Ballenanhaltevorrichtung berührt. Nach Ende des Wägevorganges erhält der Rundballen aufgrund der schiefen Ebene noch genügend Geschwindigkeit, um ohne zusätzliche Hilfen die Wägeplattform bzw. die Abrollvorrichtung zu verlassen.

Eine bevorzugte, besonders messgenaue Ausführungsform besteht darin, dass die zusätzlichen Mittel eine Ballenanhaltevorrichtung umfassen, welche in ihrer Arbeitsposition im Abstand oberhalb der Aufstandsfläche am Rundballen angreift und auf den Rundballen eine entgegengesetzt zur Abrollrichtung gerichtete Kraft ausübt, während die Ballenanhaltevorrichtung in ihrer Ruheposition außer Eingriff mit dem Rundballen ist. Aufgrund des Ballenstillstandes auf der Wägeplattform sind bei einer Stillstandsdauer von 2 bis 3 Sekunden alle Störgrößen abgeklungen, so dass Messabweichungen von unter 1% bezogen auf das Gewicht eines Ballens mit geringem Aufwand erreichbar sind.

Eine andere Ausgestaltung der Erfindung sieht vor, dass die zusätzlichen Mittel eine Ballenabbremsvorrichtung umfassen, welche den Rundballen mit reduzierter Drehgeschwindigkeit über die Wägeplattform laufen lässt. Die Wägeplattform, die der Rundballen langsam überfährt, benötigt keine Überfahrschalter, sondern erfasst die Gewichtssignale auf einer Messstrecke (Messbereich), die zwischen vorderen und hinteren Wägezellen liegt. Die Wägezellen geben bereits beim langsamen Überrollen des Ballens Gewichtssignale ab, die zur exakten Ballengewichtsmessung weiterverarbeitet werden können. Voraussetzung ist, dass der Ballen so langsam läuft, dass die gesamte Ballenaufstandsfläche kurzzeitig vollständig auf der Wägeplattform ist. Dadurch werden genaue Messwerte unabhängig von dem Schwerpunkt des Rundballens oder verschiedenen Ballenschwerpunkten des Rundballens auf der Wägeplattform erreicht. Der Vorteil dieser Lösung besteht darin, dass die Durchsatzleistung der Rundballenpresse (Ballen/Zeiteinheit) trotz der Ballenwägung nur minimal verkleinert wird.

Eine funktionell sichere und zeitsparende Lösung besteht darin, dass die Ballenabbremsvorrichtung und/oder die Ballenanhaltevorrichtung vor dem Öffnen des Hintergehäuses in ihre ausgefahrene Arbeitsposition fahren/fährt, und dass das Hintergehäuse erst schließbar ist, nachdem die Ballenabbremsvorrichtung und/oder die Ballenanhaltevorrichtung in ihrer Ruheposition ist. Dadurch ist gewährleistet, dass die Bewegung der Ballenabbremsvorrichtung und/oder der Ballenanhaltevorrichtung nicht kollidiert mit der Bewegung des Hintergehäuses und andererseits werden/wird die Ballenanhaltevorrichtung und/oder die Ballenabbremsvorrichtung rechtzeitig in ihre Arbeitsposition gebracht bzw. in ihre Ruheposition.

Die Steuerung der Ballenabbremsvorrichtung und/oder der Ballenanhaltevorrichtung in ihre Ruheposition erfolgt vorteilhaft ohne Verlustzeiten direkt oder indirekt in Abhängigkeit von der Wägeelektronik.

Weitere, vorteilhafte Ausgestaltungen der Erfindung sind durch die Merkmale der Unteransprüche gekennzeichnet.

In der Zeichnung sind nachfolgend zwei näher beschriebene Ausführungsbeispiele der Erfindung dargestellt. Es zeigt:
- Fig. 1: eine schematische Seitenansicht einer Rundballenpresse während des Wiegevorganges eines auf der Wägeplattform befindlichen Rundballens, welcher von einer in Volllinie gezeichneten, in Arbeitsposition befindlichen Ballenanhaltevorrichtung gehalten wird,
- Fig. 2: eine vergrößerte Teilseitenansicht auf die Abrollvorrichtung mit Wägeplattform und in Arbeitsstellung gezeichneter Ballenanhaltevorrichtung gemäß Figur 1,
- Fig. 3: eine Draufsicht auf die Abrollvorrichtung gemäß Fig. 2 mit Ballenanhaltevorrichtung in Ruheposition und
- Fig. 4: eine vereinfachte Seitenansicht auf eine Wägeplattform mit einer während des Wägevorganges ausweichenden Ballenabbremsvorrichtung.

Die Rundballenpresse besitzt ein zweiteiliges Pressengehäuse, bestehend aus einem Vordergehäuse 1, welches gestellfest auf einem Fahrgestell 2 ruht und einem Hintergehäuse 3, welches um eine obere Schwenkachse 4 zum Ballenausstoß in eine Entladestellung 5 aufklappbar ist. Am Vordergehäuse 1 greift eine Zugdeichsel 6 an zur Verbindung mit einem nicht dargestellten Schlepper. Die Rundballenpresse ist über eine nicht dargestellte Gelenkwellenverbindung antriebsmäßig mit dem Schlepper zu koppeln. Im Pressengehäuse wird ein Pressraum 7 mit konstantem Durchmesser von ortsfesten, aber angetriebenen Presswalzen 8 gebildet. Der Pressraum 7 kann aber auch von Stabkettenförderern oder von Riemen oder Mischformen begrenzt werden und auch von veränderlicher Größe sein - die Bauart ist für die vorliegende Erfindung unwesentlich. Das Halmgut wird durch einen Aufsammler 9 vom Boden aufgenommen und durch eine Einlassöffnung 10 in den Pressraum 7 gefördert.

Am unteren hinteren Ende des Vordergehäuses 1 ist eine sich nach hinten erstreckende Abrollvorrichtung 11 mit einer Wägeeinrichtung 12 für einen aus dem Vordergehäuse 1 ausgeworfenen Rundballen 13 angeordnet. Die Bezeichnungen "vordere" und "hintere" beziehen sich auf die Fahrtrichtung der Rundballenpresse, die durch Pfeil 14 gekennzeichnet ist.

Die Abrollvorrichtung 11 besteht in diesem Beispiel aus zwei im Abstand nebeneinander angeordneten Auslegern 15, 16, deren vordere Enden 17 durch ein Querrohr 18 fest miteinander verbunden sind. Die Ausleger 15, 16 sind um eine horizontale, quer zur Fahrtrichtung der Rundballenpresse gelegene Achse 19 auf Zapfen 20 am Vordergehäuse 1 oder am Fahrgestell schwenkbar angelenkt. Die Ausleger 15, 16 sind in ihrer unteren Arbeitsstellung 21 gezeichnet, in der die Auslegerenden 22 auf dem Erdboden aufliegen und eine schiefe Ebene für einen darauf abrollenden Rundballen 13 bilden. In der Ruhestellung nimmt die Abrollvorrichtung 11 eine nach oben geschwenkte, nicht dargestellte Position ein.

Die Wägeeinrichtung 12 beginnt unmittelbar hinter der Schwenkachse 19 der Abrollvorrichtung 11 und besteht aus einer Wägeplattform 23, die sich über zwei vordere, im Abstand nebeneinander angeordnete Wägezellen 24 und zwei hintere, im Abstand nebeneinander abgeordnete Wägezellen 25 beidseitig auf den Auslegern 15, 16 abstützt. Die Wägezellen 24, 25 sind in diesem Beispiel als Biegebalken ausgeführt, die einenends am Ausleger 15, 16 und anderenends an der Wägeplattform 23 befestigt sind. Um Überlastungen der Wägezellen 24, 25 beim Aufstoß des Rundballens 13 zu vermeiden, sind am Ausleger 15, 16 Überlastschutzschrauben 26 vorgesehen, die die Durchbiegung der Biegebalken nach unten begrenzen. Die Wägeplattform 23 besteht aus zwei nebeneinander angeordneten Längsträgern 27, 28, die in einem dem Abstand der Ausleger 15, 16 entsprechenden Abstand durch vordere 29 und hintere Querstreben 30 fest miteinander verbunden sind. Um bei steilem Hangbetrieb die Ballenlage auf der Wägeplattform 23 zu stabilisieren sind beidseitig an der Waagenbrücke 23 Seitenführungsrollen 31 angeordnet, in einem Abstand, der etwas größer ist als die Ballenbreite. Am hinteren Ende der Wägeplattform 23 ist eine Ballenanhaltevorrichtung 32 vorgesehen, die zwischen den Auslegern 15, 16 angeordnet ist.

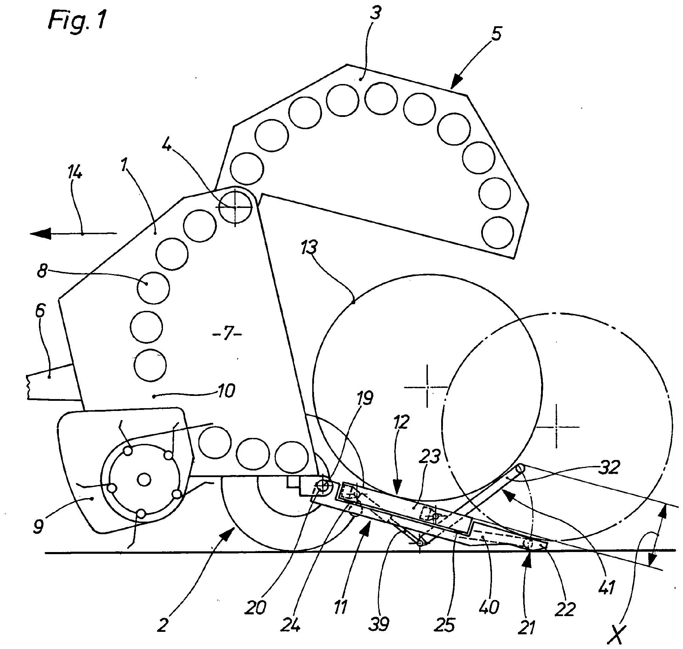

Die Ballenanhaltevorrichtung 32 ist als U-förmiger Bügel ausgebildet und besteht aus zwei Armen 33, 34, deren hintere Enden durch einen Quersteg 35 fest miteinander verbunden sind, der parallel zur Achse 19 gelegen ist. Beide Arme 33, 34 sind nach etwa einem Viertel ihrer Länge von ihrem vorderen Ende 38 aus gesehen über Bolzen-/ Laschen-Verbindungen 36 an der hinteren Querstrebe 18 befestigt, so dass die Ballenanhaltevorrichtung 32 um die Drehachse 37 verschwenkbar ist. An ihren vorderen Enden 38 sind beide Arme 33, 34 mit je einem Hydrozylinder 39 verbunden, die anderenends jeweils an der Querstrebe 17 angreifen und dazu geeignet sind, um die Ballenanhaltevorrichtung 32 aus ihrer in Strichlinie gezeichneten Ruhestellung 40 (Fig.1), in der diese unterhalb oder in der Abrollebene des Rundballens 13 ist, in eine in Volllinie gezeichnete Arbeitsstellung 41 zu bewegen, in der diese mit den Auslegern 15, 16 einen stumpfen Winkel bildet und in den Abrollweg des Rundballens 13 etwa nach einem 1/3 des Ballendurchmessers von der Ballenaufstandsfläche aus gesehen hineinragt, siehe durch Pfeil X gekennzeichneten Abstand.

Die Hydrozylinder 39 sind an ein nicht dargestelltes Hydrauliksystem zum Auf- und Zuschwenken des Hintergehäuses 3 angeschlossen. Aufgrund der geringen Bedienkraft wird die Ballenanhaltevorrichtung 32 vorrangig, d.h. vor dem Öffnen des Hintergehäuse 3 in ihre Arbeitsposition 21 bewegt. Ferner ist die Steuerung so gestaltet, dass das Hintergehäuse 3 erst wieder geschlossen werden kann, nachdem die Ballenanhaltevorrichtung 32 in ihrer Ruhestellung 40 ist und der Rundballen 13 die Abrollvorrichtung 11 verlassen hat.

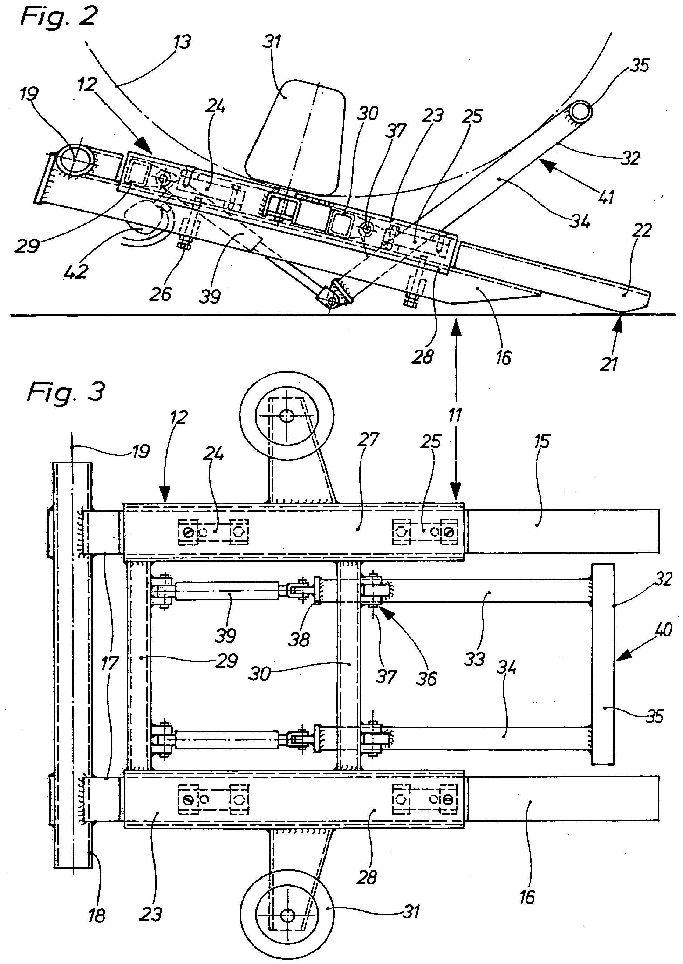

Die Arbeitsweise der Wägeeinrichtung 12 ist wie folgt:
Während des Pressvorganges befindet sich die Ballenanhaltevorrichtung 32 in Ruhestellung 40 (Fig.1). Ist ein Ballen 13 in der Rundballenpresse fertig gepresst und umhüllt, wird die Ballenanhaltevorrichtung 32 vor dem Ballenausstoß in ihre Arbeitsstellung 41, siehe Fig 1, 2 geschwenkt. Der nach dem Öffnen des Hintergehäuses 3 ausgeworfene Rundballen 13 läuft auf die Wägeplattform 23 und wird durch die Ballenanhaltevorrichtung 32 in seiner Abrollbewegung gestoppt. Um Stöße zu vermeiden, kann im Leitungssystem der Hydrozylinder 39 beispielsweise ein Hydrospeicher 42 als Dämpfungselement angeordnet sein. Die gesamte Ballenaufstandsfläche befindet sich auf der Wägeplattform 23. Jede der vier Wägezellen 24, 25 liefert Gewichtssignale, die in einem nicht näher dargestellten, an sich bekannten Rechner oder Mikroprozessor ausgewertet und miteinander in Beziehung gesetzt werden. Sind innerhalb eines vorbestimmbaren Zeitlimits, z.B. drei Sekunden, eine bestimmte Anzahl Daten signalisiert, so werden die Messpunkte aufgezeichnet und ausgewertet. Versuche haben gezeigt, dass etwa 2 bis 3 Sekunden Ballenstillstand ausreichen, damit alle Schwingungen abgeklungen sind. Auf diese Art und Weise lassen sich Ballengewichte feststellen, die weniger als 0,5% pro Ballen vom tatsächlichen Ballengewicht abweichen. Sobald die Wägeelektronik die Daten aufgezeichnet hat, werden die Hydrozylinder 39 über nicht dargestellte Steuerventile freigegeben, so dass der Ballenstopbügel 32 in seine Ruhestellung 40 bewegt wird, der Rundballen 13 von der Abrollvorrichtung 11 abrollt und das Hintergehäuse 3 wieder geschlossen wird. Ein neuer Pressvorgang kann beginnen.

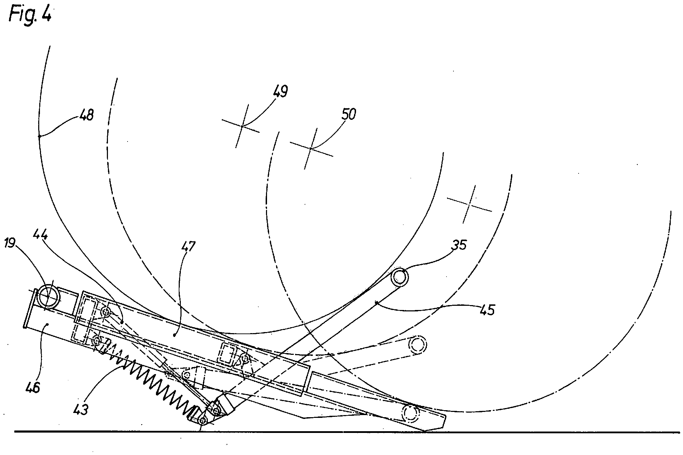

In dem Ausführungsbeispiel nach Fig. 4 sind die Hydrozylinder 39 durch Druckfedern 43 und Stoßdämpfer 44 ersetzt, um eine Ballenabbremsvorrichtung 45 zu bilden. Die Druckfedern 43 und die Stoßdämpfer 44 sind beidseitig innerhalb der Ausleger 46 angeordnet und an der Wägeplattform 47 und an der Ballenabbremsvorrichtung 45 angelenkt und so ausgelegt, dass ein gegen die Ballenabbremsvorrichtung 45 rollender Rundballen 48 in seiner Abrollbewegung zwischen vorderen 24 und hinteren Wägezellen 25, (Fig. 2) gebremst wird, aber nicht ganz zum Stillstand kommt, weil die Ballenabbremsvorrichtung 45 durch die nach hinten gerichtete Kraftkomponente des Rundballens 48 aus ihre in Volllinie gezeichneten Position während der Wägung in die in Strichlinie gezeichnete Position ausweicht. Dadurch sind trotz Wägung während des verzögerten Abrollens des Rundballens 48 innerhalb des Messbereiches, siehe Ballenschwerpunktlagen 49, 50, stabile Gewichtsmessungen des Rundballens 48 mit hoher Genauigkeit möglich.

Im Rahmen der Erfindung ist es auch möglich, der eigentlichen Anhalte- /Wägeposition des Rundballens 13 eine Verzögerungsstrecke vorzuschalten, während der die Ballenanhaltevorrichtung 32 durch geeignete Mittel, wie beispielsweise ein zwischen Ballenanhaltevorrichtung 32 und Wägeplattform 23 angeordnetes Federelement, einen Energiespeicher und/oder ein Dämpfungselement zusätzlich als Ballenabbremsvorrichtung dient, welche die Drehgeschwindigkeit des Rundballens 13 nach dem Ballenausstoß aus der Rundballenpresse und vor dem Auflaufen oder beim Überfahren der Wägeplattform (23) reduziert. Hierdurch werden zwar Stoßbelastungen reduziert, jedoch kann sich die Zeit bis zum Wiederbeginn eines neuen Pressvorganges verlängern.

## Patentansprüche

1. Rundballenpresse mit einer sich über Wägesensoren (24, 25) auf einer Abrollvorrichtung (11) abstützenden Wägeplattform (23,47) zur Erfassung der Gewichtskraft eines fertig gebundenen Rundballens (13), **dadurch gekennzeichnet, dass die Rundballenpresse** eine bewegbar an der Wägeplattform (23,47) angelenkte Ballenanhaltevorrichtung (32) **umfasst,** welche den Rundballen (13) gegen ein Abrollen auf der Wägeplattform (23, 47) festhält und nach Abschluss der Wägung in Abrollrichtung freigibt, wobei die Ballenanhaltevorrichtung (32) in ihrer Arbeitsposition (41) im Abstand (X) oberhalb der Aufstandsfläche am Rundballen (13) angreift, und auf den Rundballen (13) eine entgegengesetzt zur Abrollrichtung gerichtete Kraft ausübt, während die Ballenanhaltevorrichtung (32) in ihrer Ruheposition (40) außer Eingriff mit dem Rundballen (13) ist.

2. Rundballenpresse mit einer sich über Wägesensoren (24, 25) auf einer Abrollvorrichtung (11) abstützenden Wägeplattform (23,47) zur Erfassung der Gewichtskraft eines fertig gebundenen Rundballens (48),), **dadurch gekennzeichnet, dass die Rundballenpresse** eine bewegbar an der Wägeplattform (23, 47) angelenkte Ballenabbremsvorrichtung (45) **umfasst**, welche den Rundballen (48) gegen ein Abrollen auf der Wägeplattform (23,47) bremst, mit reduzierter Drehgeschwindigkeit über die Wägeplattform (23, 47) laufen lasst und nach Abschluss der Wägung in Abrollrichtung freigibt.

3. Rundballenpresse nach Anspruch 1 und 2, **dadurch gekennzeichnet, dass** die Ballenanhaltevorrichtung (32) zusätzlich als Ballenabbremsvorrichtung dient, welche die Drehgeschwindigkeit des Rundballens (13) vor seinem Stillstand auf der Wägeplattform (23) reduziert.

4. Rundballenpresse nach einem oder mehreren der vorhergehenden Ansprüche, **dadurch gekennzeichnet, dass** die Ballenabbremsvorrichtung (45) und/oder die Ballenanhaltevorrichtung (32) vor dem Öffnen eines Hintergehäuses (3) in ihre ausgefahrene Arbeitsposition (41) fahren/fahrt, und dass das Hintergehäuse (3) erst schließbar ist, nachdem die Ballenabbremsvorrichtung (45) und/oder die Ballenanhaltevorrichtung (32) in ihrer Ruheposition in ihrer Ruheposition (40) sind.

5. Rundballenpresse nach einem oder mehreren der vorhergehenden Ansprüche, **dadurch gekennzeichnet, dass** die Ballenabbremsvorrichtung (45) und/oder die Ballenanhaltevorrichtung (32) durch hydraulische, mechanische, elektrische und/oder pneumatische Antriebe (39, 42, 43) verstellbar sind/ist.

6. Rundballenpresse nach einem oder mehreren der vorhergehenden Ansprüche, **dadurch gekennzeichnet, dass** die Ballenabbremsvorrichtung (45) und/oder die Ballenanhaltevorrichtung (32) direkt oder indirekt in Abhängigkeit vom in eine Entladestellung aufklappbaren Hintergehäuse (3) verstellbar sind/ist.

7. Rundballenpresse nach einem oder mehreren der vorhergehenden Ansprüche, **dadurch gekennzeichnet, dass** die Ballenabbremsvorrichtung (45) und/oder die Ballenanhaltevorrichtung (32) direkt oder indirekt in Abhängigkeit von einer Wägeelektronik verstellbar sind/ist.

8. Rundballenpresse nach den Ansprüchen 4 und 7, **dadurch gekennzeichnet, dass** das Hintergehäuse (3) direkt oder indirekt in Abhängigkeit von der Ballenabbremsvorrichtung (45) und/oder der Ballenanhaltevorrichtung (32), der Abrollvorrichtung (11) und/oder in Abhängigkeit von der Wägeelektronik steuerbar ist.

9. Rundballenpresse nach einem oder mehreren der vorhergehenden Ansprüche, **dadurch gekennzeichnet, dass** die Ballenabbremsvorrichtung (45) und/oder die Ballenanhaltevorrichtung (32) nach einer vorbestimmten Zeit aus ihrer Arbeitsposition (41) in ihre Ruheposition (40) verstellbar sind/ist.

10. Rundballenpresse nach einem oder mehreren der vorhergehenden Ansprüche, **dadurch gekennzeichnet, dass** die Ballenabbremsvorrichtung (45) und/oder die Ballenanhaltevorrichtung (32) um eine quer zu der Fahrtrichtung der Rundballenpresse gelegene, im wesentlichen horizontale Achse (37) schwenkbar sind/ist und in ihrer Arbeitsposition (41) mit der Abrollvorrichtung (11) einen nach oben offenen, stumpfen Winkel einschließen/einschließt.

11. Rundballenpresse nach einem oder mehreren der vorhergehenden Ansprüche, **dadurch gekennzeichnet, dass** die Wägeplattform (23, 47) im vorderen Bereich der Abrollvorrichtung (11) angeordnet ist.

12. Rundballenpresse nach einem oder mehreren der vorhergehenden Ansprüche, **dadurch gekennzeichnet, dass** die die Auslegerenden (22) der Abrollvorrichtung (11) während des Wiegevorganges auf dem Erdboden aufliegen.

13. Rundballenpresse nach einem oder mehreren der vorhergehenden Ansprüche, **dadurch gekennzeichnet, dass** sich die Wägeplattform (23, 47) über Wägezellen (24, 25) beidseitig auf der Abrollvorrichtung (11) abstützt.

14. Rundballenpresse nach Anspruch 13, **dadurch gekennzeichnet, dass** vordere (24) und hintere Wägezellen (25) vorgesehen sind.

15. Rundballenpresse nach einem oder mehreren der vorhergehenden Ansprüche, **dadurch gekennzeichnet, dass** die Wägeplattform (23, 47) Führungselemente (31) zur seitlichen Führung des Rundballens (13) aufweist.

16. Rundballenpresse nach einem oder mehreren der Ansprüche 3 bis 14, **dadurch gekennzeichnet, dass** einerseits zwischen der Ballenabbremsvorrichtung (45) und/oder der Ballenanhaltevorrichtung (32) sowie andererseits der Wägeplattform (23, 47) wenigstens ein Federelement (43), ein Energiespeicher und/oder ein Dämpfungselement (44) angeordnet sind/ist, und dass geeignete Positioniermittel vorgesehen sind.

## Claims

1. Rotobaler having a weighing platform (23, 47) which is supported on a rolling device (11) via weighing sensors (24, 25), the weighing platform (23, 47) is for recording the weight of a readily wrapped round bale (13), **characterized in that** the rotobaler comprises a bale-stopping device (32) which is movably coupled to the weighing platform (23, 47), which secures the round bale (13) against rolling along the weighing platform (23, 47) and, after the weighing is finished, releases said round bale in the rolling direction, wherein the bale-stopping device (32) being in its working position (41) acts on the round bale (13) at a distance (X) above the contact surface and exerts a force on the round bale (13) which is directed opposite to the rolling direction, whereas the bale-stopping device (32) in its inoperative position (40) is not in engagement with the round bale (13).

2. Rotobaler having a weighing platform (23, 47) which is supported on a rolling device (11) via weighing sensors (24, 25), the weighing platform (23, 47) is for recording the weight of a fully bound round bale (48), **characterized in that** the rotobaler comprises a bale-braking device (45) which is movably coupled to the weighing platform (23, 47), brakes the round bale (48) against rolling along the weighing platform (23, 47), allows said round bale to run at a reduced rotational speed over the weighing platform (23, 47) and, after the weighing has finished, releases said round bale in the rolling direction.

3. Rotobaler according to Claims 1 and 2, **characterized in that** the bale-stopping device (32) additionally serves as a bale-braking device which reduces the rotational speed of the round bale (13) before the round bale (13) stops on the weighing platform (23).

4. Rotobaler according to one or more of the preceding claims, **characterized in that**, before the opening of a rear housing (3), the bale-braking device (45) and/or the bale-stopping device (32) move/moves into its extended working position (41) and **in that** the rear housing (3) is closable only after the bale-braking device (45) and/or the bale-stopping device (32) are/is in its inoperative position (40).

5. Rotobaler according to one or more of the preceding claims, **characterized in that** the bale-braking device (45) and/or the bale-stopping device (32) are/is adjustable by hydraulic, mechanical, electric and/or pneumatic drives (39, 42, 43).

6. Rotobaler according to one or more of the preceding claims, **characterized in that** the bale-braking device (45) and/or the bale-stopping device (32) are/is adjustable directly or indirectly depending on the rear housing (3), which is openable into an unloading positioning.

7. Rotobaler according to one or more of the preceding claims, **characterized in that** the bale-braking device (45) and/or the bale-stopping device (32) are/is adjustable directly or indirectly depending on an electronic weighing unit.

8. Rotobaler according to Claims 4 and 7, **characterized in that** the rear housing (3) is controllable directly or indirectly depending on the bale-braking device (45) and/or the bale-stopping device (32), the rolling device (11) and/or depending on the electronic weighing unit.

9. Rotobaler according to one or more of the preceding claims, **characterized in that** the bale-braking device (45) and/or the bale-stopping device (32) are/is adjustable from its working position (41) into its inoperative position (40) after a predetermined time span.

10. Rotobaler according to one or more of the preceding claims, **characterized in that** the bale-braking device (45) and/or the bale-stopping device (32) are/is pivotable about a substantially horizontal axis (37) positioned transversely with respect to the traveling direction of the rotobaler, and in the working position (41) of said bale-braking and/or bale-stopping device enclose/encloses an upwardly open obtuse angle with the rolling device (11).

11. Rotobaler according to one or more of the preceding claims, **characterized in that** the weighing device (23, 47) is arranged in the front region of the rolling device (11).

12. Rotobaler according to one or more of the preceding claims, **characterized in that** the extension arm ends (22) of the rolling device (11) rest on the ground during the weighing operation.

13. Rotobaler according to one or more of the preceding claims, **characterized in that** the weighing platform (23, 47) is supported on the rolling device (11) via weighing cells (24, 25) on both sides.

14. Rotobaler according to Claim 13, **characterized in that** front weighing cells (24) and rear weighing cells (25) are provided.

15. Rotobaler according to one or more of the preceding claims, **characterized in that** the weighing platform (23, 47) has guide elements (31) for laterally guiding the round bale (13).

16. Rotobaler according to one or more of preceding Claims 3 to 14, **characterized in that** at least one spring element (43), an energy accumulator and/or a damping element (44) are/is arranged between the bale-braking device (45) and/or the bale-stopping device (32) on the one hand and the weighing platform (23, 47) on the other hand and **in that** suitable positioning means are provided.

## Revendications

1. Presse à balles rondes avec une plate-forme de pesage (23, 47) s'appuyant par des capteurs de pesage (24, 25) sur un dispositif de déchargement roulant (11) pour la détection du poids d'une balle ronde terminée (13), **caractérisée en ce que** la presse à balles rondes comprend un dispositif de retenue de balles (32) articulé de façon mobile à la plate-forme de pesage (23, 47), qui maintient la balle ronde (13) sur la plate-forme de pesage (23, 47) pour l'empêcher de rouler et la déclencher après la fin du pesage dans la direction de déchargement roulant, dans laquelle le dispositif de retenue de balles (32) dans sa position de travail (41) s'applique sur la balle ronde (13) à une distance (X) au-dessus de la face de emplacement, et exerce sur la balle ronde (13) une force dirigée à l'inverse de la direction de déchargement roulant, tandis que le dispositif de retenue de balles (32) est dans sa position de repos (40) hors de contact avec la balle ronde (13).

2. Presse à balles rondes avec une plate-forme de pesage (23, 47) s'appuyant par des capteurs de pesage (24, 25) sur un dispositif de déchargement roulant (11) pour la détection du poids d'une balle ronde terminée (48), **caractérisée en ce que** la presse à balles rondes comprend un dispositif de freinage de balles (45) articulé de façon mobile à la plate-forme de pesage (23, 47), qui freine la balle ronde (48) sur la plate-forme de pesage (23, 47) pour l'empêcher de rouler, qui la laisse ensuite rouler à vitesse réduite sur la plate-forme de pesage (23, 47) et la libère dans la direction de déchargement roulant à la fin du pesage.

3. Presse à balles rondes selon la revendication 1 ou 2, **caractérisée en ce que** le dispositif de retenue de balles (32) sert en outre de dispositif de freinage de balles, qui réduit la vitesse de rotation de la balle ronde (13) avant son arrêt sur la plate-forme de pesage (23).

4. Presse à balles rondes selon une ou plusieurs des revendications précédentes, **caractérisée en ce que** le dispositif de freinage de balles (45) et/ou le dispositif de retenue de balles (32) se déplace(nt) dans sa/leur position de travail étendue (41) avant l'ouverture d'une enceinte arrière (3), et **en ce que** l'enceinte arrière (3) ne peut être fermée qu'après que le dispositif de freinage de balles (45) et/ou le dispositif de retenue de balles (32) se trouve(nt) dans sa/leur position de repos (40).

5. Presse à balles rondes selon une ou plusieurs des revendications précédentes, **caractérisée en ce que** le dispositif de freinage de balles (45) et/ou le dispositif de retenue de balles (32) peut/peuvent être déplacé(s) par des entraînements hydrauliques, mécaniques, électriques et/ou pneumatiques (39, 42, 43).

6. Presse à balles rondes selon une ou plusieurs des revendications précédentes, **caractérisée en ce que** le dispositif de freinage de balles (45) et/ou le dispositif de retenue de balles (32) peut/peuvent être déplacé(s) directement ou indirectement en fonction de l'enceinte arrière (3) relevable dans une position de déchargement.

7. Presse à balles rondes selon une ou plusieurs des revendications précédentes, **caractérisée en ce que** le dispositif de freinage de balles (45) et/ou le dispositif de retenue de balles (32) peut/peuvent être déplacé(s) directement ou indirectement en fonction d'une électronique de pesage.

8. Presse à balles rondes selon les revendications 4 et 7, **caractérisée en ce que** l'enceinte arrière (3) peut être commandée directement ou indirectement en fonction du dispositif de freinage de balles (45) et/ou du dispositif de retenue de balles (32), du dispositif de déchargement roulant (11) et/ou en fonction de l'électronique de pesage.

9. Presse à balles rondes selon une ou plusieurs des revendications précédentes, **caractérisée en ce que** le dispositif de freinage de balles (45) et/ou le dispositif de retenue de balles (32) peut/peuvent être déplacé(s) de leur position de travail (41) à leur position de repos (40) après un temps prédéterminé.

10. Presse à balles rondes selon une ou plusieurs des revendications précédentes, **caractérisée en ce que** le dispositif de freinage de balles (45) et/ou le dispositif de retenue de balles (32) peut/peuvent pivoter autour d'un axe essentiellement horizontal (37), disposé transversalement à la direction de roulage de la presse à balles et forme(nt) dans sa/leur position de travail (41) un angle obtus ouvert vers le haut avec le dispositif de déchargement roulant (11).

11. Presse à balles rondes selon une ou plusieurs des revendications précédentes, **caractérisée en ce que** la plate-forme de pesage (23, 47) est disposée dans la région antérieure du dispositif de déchargement roulant (11).

12. Presse à balles rondes selon une ou plusieurs des revendications précédentes, **caractérisée en ce que** les extrémités de bras (22) du dispositif de déchargement roulant (11) reposent sur le sol pendant l'opération de pesage.

13. Presse à balles rondes selon une ou plusieurs des revendications précédentes, **caractérisée en ce que** la plate-forme de pesage (23, 47) s'appuie par des capteurs de pesage (24, 25) des deux côtés sur le dispositif de déchargement roulant (11).

14. Presse à balles rondes selon la revendication 13, **caractérisée en ce qu'**il est prévu des capteurs de pesage antérieures (24) et postérieures (25).

15. Presse à balles rondes selon une ou plusieurs des revendications précédentes, **caractérisée en ce que** la plate-forme de pesage (23, 47) présente des éléments de guidage (31) pour le guidage latéral de la balle ronde (13).

16. Presse à balles rondes selon une ou plusieurs des revendications 3 à 14, **caractérisée en ce qu'**au moins un élément de ressort (43), un accumulateur d'énergie et/ou un élément d'amortissement (44) est/sont disposé(s) entre d'une part le dispositif de freinage de balles (45) et/ou le dispositif de retenue de balles (32) ainsi que d'autre part la plate-forme de pesage (23, 47), et **en ce qu'**il est prévu des moyens de positionnement appropriés.
